# EUROPÄISCHE PATENTANMELDUNG

(11) **EP 3 205 246 A1**
(43) Veröffentlichungstag der Anmeldung: **16.08.2017**
(21) Anmeldenummer: 17154945.4
(22) Anmeldetag: 07.02.2017
(51) Int. Cl.: A47J 37/12

(54) **FRITTIEREINSATZ MIT GRIFF**

(30) Priorität: 11.02.2016 DE 202016100686 U
(71) Anmelder: Wenko-Wenselaar GmbH & Co. KG, 40721 Hilden (DE)
(72) Erfinder: Köllner, Niklas, 40721 Hilden (DE)
(74) Vertreter: Kreuzkamp, Markus

(57) **Zusammenfassung**

Frittiereinsatz mit Griff, wobei der Frittiereinsatz im Wesentlichen aus einer flächig erstreckten Lochplatte besteht, wobei die Lochplatte Standfüße aufweist, welche in eingesetzter Position den Frittiereinsatz zu einem horizontalen Gefäßboden hin beabstanden und die Lochplatte in eingesetzter Position mit einem seitlich offenen Spalt zwischen Lochplatte und horizontalem Gefäßboden angeordnet ist.

## Beschreibung

### TECHNISCHER BEREICH

Die vorliegende Erfindung betrifft einen Frittiereinsatz mit Griff gemäß dem Oberbegriff der unabhängigen Ansprüche. Ein Frittiereinsatz wird in ein Frittiergerät eingesetzt und ermöglicht das Frittieren der in dem Einsatz geträgerten Nahrungsmittel. In einfachster Form handelt es sich um Drahtkörbe - z. B. für Kartoffelprodukte - welche so frittiert werden können. Vorliegend ist der technische Bereich auf Frittiereinsätze mit Griff ausgerichtet. Die DE 1 804 842 U1, die DE 2 016 819 C, DE 29 48 135 A1 sowie die DE 25 53 164 A1 bieten Beispiele für solche Einsätze mit verschiedenen Fortbildungen.

### BESCHREIBUNG DES STANDES DER TECHNIK

Gattungsgemäße Frittiereinsätze weisen eine glatte, möglichst einfache Lochplatte als Träger auf. So offenbart die GB 1901 04271 A Lochplatten, welche über Drahtbügel in ein Frittier-Gefäß abgesenkt werden können. Hierbei weisen die Lochplatten neben den gleichmäßig verteilten Löchern für das siedende Öl Ausklinkungen auf, welche weitere Verschlüsse, Bügel oder Trägergriffe mit einsetzbaren Haken aufnehmen können. Über ausziehbare Blech-Segmente kann die Lochplatte in ihrer Fläche vergrößert oder verkleinert und vorteilhaft an verschiedene Töpfe angepasst werden. Nachteilig ist hier, dass Trägergriffe nur über zusätzliche Bügel einsetzbar sind und dass weiche Nahrungsmittel durch die Löcher hindurchragen und an einem heißen Gefäßboden festbacken können. Weiterhin ist nachteilig, dass Lochplatten-Segmente mit schlüssig aufliegendem Rand bei abtropfendem Wasser den schlagartig entstehenden Wasserdampf nur über die Löcher nach oben hin abgeben können, wodurch erheblich mehr Spritzer und Verdampfungsstöße erzeugt werden. Letzteres verschmutzt den Herd, gefährdet den Nutzer und verschlechtert die Gleichmäßigkeit des Frittierens.

Aufgabe der vorliegenden Erfindung war es daher, die Nachteile des Standes der Technik zu überwinden und einen Frittiereinsatz mit Griff bereitzustellen, welcher trotz einfachsten Designs eine verbesserte Sicherheit bei der Benutzung bereitzustellen vermag.

Die Lösung dieser Aufgabe erfolgt gemäß der Merkmale der unabhängigen Schutzansprüche. Vorteilhafte Ausführungsformen ergeben sich aus den abhängigen Ansprüchen sowie der nachfolgenden Beschreibung.

### ZUSAMMENFASSUNG DER ERFINDUNG

Erfindungsgemäß ist ein Frittiereinsatz mit Griff, bei dem der Frittiereinsatz im Wesentlichen aus einer flächig erstreckten Lochplatte besteht, dadurch gekennzeichnet, dass die Lochplatte Standfüße aufweist, welche in eingesetzter Position den Frittiereinsatz zu einem horizontalen Gefäßboden hin beabstanden und die Lochplatte in eingesetzter Position mit einem seitlich offenen Spalt zwischen Lochplatte und horizontalem Gefäßboden angeordnet ist.

### BESCHREIBUNG DER ERFINDUNG UND VORTEILHAFTER MERKMALE

Ein erfindungsgemäßer Frittiereinsatz mit Griff besteht im Wesentlichen aus einer flächig erstreckten Lochplatte; dieses etablierte Design bietet die Möglichkeit, die Hauptkomponente des Frittiereinsatzes schnell und maschinell per Stanzverfahren oder LaserSchneidverfahren fertigen zu lassen. Wesentlich ist, dass die Lochplatte Standfüße aufweist. Die Standfüße sind an der Unterseite der Lochplatte angeordnet und setzen im entsprechenden Frittiergefäß - bevorzugt in einer Frittierpfanne mit flachem Boden - auf. In eingesetzter Position wird der Frittiereinsatz dadurch zu einem horizontalen Gefäßboden hin - hier bevorzugt einem flachen Pfannenboden - beabstandet. Zwischen Boden und Lochplatte entsteht dadurch ein Spalt. Die Lochplatte deckt in eingesetzter Position den Boden des Frittiergefäßes mit einem seitlich offenen Spalt ab und zwischen Lochplatte und horizontalem Gefäßboden wird dadurch ein vergrößertes Volumen meit einer Höhe im Millimeter- bis Zentimeter-Bereich geschaffen, in welchem das Frittiermedium zirkulieren und über welches eintretendes Wasser gleichmäßiger ausgasen kann. Zudem werden weiche Lebensmittel nicht mehr am Gefäßboden festbacken können, selbst wenn diese teilweise in eines der kleinen Löcher hineingedrückt werden. Der erfindungsgemäße Frittiereinsatz ist somit trotz kostengünstigem Design sicherer in der Benutzung und gleichmäßiger im Frittierergebnis.

Bevorzugt ist der Frittiereinsatz dadurch gekennzeichnet, dass der Griff in Ausklinkungen der Lochplatte einsetzbar ist. Ein einsetzbarer Griff kann je nach Bedarf auch wieder entnommen werden. Durch Entnahme des Griffes nach dem Einsetzen in ein Frittiergefäß wird vorteilhaft verhindert, dass der Griff weiterhin übersteht und gefährlich bei versehentlichem Belasten heißes Frittierfett / heiße Speisen aus dem Gefäß katapultiert werden können.

Die Trennbarkeit des Griffes von der Lochplatte erleichtert zudem die Reinigung in der Spülmaschine sowie per Hand, ermöglicht platzsparendes Verstauen des Einsatzes und verringert die Verpackungsgröße, was zu verringerten Lagerungs- und Transportkosten führt.

Bevorzugt ist der Frittiereinsatz dadurch gekennzeichnet, dass der Griff U-förmig gebogen ist und unter elastischer Klemmspannung mit der Lochplatte verbindbar ist. Durch eine Verbindung mit elastischer Klemmspannung ist das Entnehmen des Griffes leicht und einfach und ein Verkanten oder unbeabsichtigtes Verdrehen des Frittiereinsatzes im heißen Frittierfett wird vorteilhaft vermieden.

Bevorzugt ist der Frittiereinsatz dadurch gekennzeichnet, dass der Griff im mit der Lochplatte verbundenen Zustand flach und seitlich herausragend angeordnet ist. Diese Ausführungsform erlaubt besonders bei flachen Frittiergefäßen wie Pfannen ein Einsetzen und Entnehmen, bei dem die Hand/der Griff stets außerhalb der Öffnung des Gefäßes positioniert werden kann. Ein direktes Verbrühen durch vertikale Spritzer wird so sicher vermieden.

Bevorzugt ist der Frittiereinsatz dadurch gekennzeichnet, dass der Griff eine thermisch isolierende Beschichtung, bevorzugt eine Silikonbeschichtung, im Handhabungsbereich aufweist. Eine thermische Isolierung erlaubt das wiederholte Frittieren und langfristige Eintauchen in heißes Frittierfett, ohne dass eine Überhitzung des Griffes durch Wärmeleitung zu befürchten wäre. Dauerhafte Frittier-Vorgänge wie sie im Gastronomiebereich üblich sind, können so mit verbesserter Sicherheit durchgeführt werden.

Bevorzugt ist der Frittiereinsatz dadurch gekennzeichnet, dass die Lochplatte samt Standfüßen aus rostfreiem Edelstahl gefertigt ist. Rostfreier Edelstahl erlaubt vorteilhaft eine Maschinen-Reinigung nach der Benutzung und steigert den Mehrwert des Einsatzes im gewerblichen Gebrauch und die nutzerseitige Akzeptanz. Bevorzugt besteht auch der Griff aus einem elastischen, rostfreien Edelstahl.

Bevorzugt ist der Frittiereinsatz dadurch gekennzeichnet, dass die Lochplatte aus einer Lochplattenkombination besteht, welche unter Veränderung der Lochgröße gegeneinander verschiebbar gekoppelt sind. Die erlaubt vorteilhaft, für besonders weiche oder kleinteilige Speisen eine kleinere Lochgröße einzustellen. Ein Festbacken und schlagartiges Zerplatzen oder Verdampfen von Speiseteilen am Gefäßboden wird so verbessert vermeidbar.

Bevorzugt ist der Frittiereinsatz dadurch gekennzeichnet, dass Lochplatte und/oder Griff zumindest abschnittsweise mit thermochromer Beschichtung ausgerüstet sind. Eine thermochrome Beschichtung zeigt optisch das Erreichen einer bestimmten Außentemperatur an. Vorteilhaft kann mit einem entkoppelten Griff die Öltemperatur geprüft und bei ausreichender Temperatur ein rascher Frittiervorgang vorgenommen werden; überlange Frittiervorgänge bei zunächst zu kaltem Frittieröl, bei dem sich Speisen zunächst vollsaugen, um dann doch noch schlagartig und gefährlich Wasser freizusetzen, sind so sicher vermeidbar.

Weitere Vorteile ergeben sich aus den Ausführungsbeispielen. Es versteht sich, dass die vorbeschriebenen, bevorzugten Merkmale, Vorteile und nachfolgenden Ausführungsbeispiele nicht beschränkend aufzufassen sind. Vorteilhafte oder bevorzugte, zusätzliche Merkmale und zusätzliche Merkmalskombinationen, wie sie in der Beschreibung erläutert sind, können im Rahmen der unabhängigen Ansprüche im beanspruchten Gegenstand sowohl einzeln als auch abweichend kombiniert verwirklicht werden, ohne dass der Bereich der Erfindung verlassen würde.

### DETAILLIERTE ERLÄUTERUNG DER ERFINDUNG AN HAND VON AUSFÜHRUNGBEISPIELEN

In bevorzugter Ausführungsform ist ein Frittiereinsatz mit Griff, bei dem der Frittiereinsatz im Wesentlichen aus einer flächig erstreckten Lochplatte besteht, dadurch gekennzeichnet, dass
- die Lochplatte Standfüße aufweist, welche in eingesetzter Position den Frittiereinsatz zu einem horizontalen Gefäßboden hin beabstanden und die Lochplatte in eingesetzter Position mit einem seitlich offenen Spalt zwischen Lochplatte und horizontalem Gefäßboden angeordnet ist,
- der Griff in Ausklinkungen der Lochplatte einsetzbar ist,
- der Griff U-förmig gebogen ist und unter elastischer Klemmspannung mit der Lochplatte verbindbar ist,
- der Griff in mit der Lochplatte verbundenem Zustand flach und seitlich herausragend angeordnet ist,
- der Griff eine thermisch isolierende Silikonbeschichtung im Handhabungsbereich aufweist,
- die Lochplatte samt Standfüßen aus rostfreiem Edelstahl besteht
- der Griff aus einem elastischen, rostfreien Edelstahl besteht.

### INDUSTRIELLE ANWENDBARKEIT

Das Problem etablierter, flächig erstreckter Frittiereinsätze ist, dass diese ein Festbacken von Speisen und ungleichmäßige Frittiervorgänge nicht zufriedenstellend vermeiden. Aufgabe ist, diesen Nachteil zu überwinden und die Sicherheit und die Gleichmäßigkeit bei der Verwendung zu verbessern.

Als Lösung wird bei einem Frittiereinsatz mit Griff, bei dem der Frittiereinsatz im Wesentlichen aus einer flächig erstreckten Lochplatte besteht, die Lochplatte mit Standfüßen versehen. Dadurch ist in eingesetzter Position ein seitlich offener Spalt gegeben. Das Öl kann so besser zirkulieren und Speisen können nicht mehr festbacken. Der Griff ist in Ausklinkungen der Lochplatte einsetzbar ist und kann während des Frittierens herausgenommen werden, um die Gleichmäßigkeit zu verbessern. Eine thermisch isolierende Silikonbeschichtung im Handhabungsbereich erhöht die Sicherheit und die Fertigung aus Edelstahl macht das Gerät spülmaschinenfest.

Sowohl Frittiervorgänge gastronomisch großer Mengen an Speisen als auch kurze Frittiervorgänge haushaltsüblicher Mengen werden so mit verbesserter Sicherheit und zufriedenstellendem Ergebnis mit geldwertem Vorteil zugänglich.

## Patentansprüche

1. Frittiereinsatz mit Griff, wobei der Frittiereinsatz im Wesentlichen aus einer flächig erstreckten Lochplatte besteht, **dadurch gekennzeichnet, dass** die Lochplatte Standfüße aufweist, welche in eingesetzter Position den Frittiereinsatz zu einem horizontalen Gefäßboden hin beabstanden und die Lochplatte in eingesetzter Position mit einem seitlich offenen Spalt zwischen Lochplatte und horizontalem Gefäßboden angeordnet ist.

2. Frittiereinsatz nach dem vorhergehenden Schutzanspruch, **dadurch gekennzeichnet, dass** der Griff in Ausklinkungen der Lochplatte einsetzbar ist.

3. Frittiereinsatz nach einem der vorhergehenden Schutzansprüche, **dadurch gekennzeichnet, dass** der Griff U-förmig gebogen ist und unter elastischer Klemmspannung mit der Lochplatte verbindbar ist.

4. Frittiereinsatz nach einem der vorhergehenden Schutzansprüche, **dadurch gekennzeichnet, dass** der Griff in mit der Lochplatte verbundenem Zustand flach und seitlich herausragend angeordnet ist.

5. Frittiereinsatz nach einem der vorhergehenden Schutzansprüche, **dadurch gekennzeichnet, dass** der Griff eine thermisch isolierende Beschichtung, bevorzugt eine Silikonbeschichtung, im Handhabungsbereich aufweist.

6. Frittiereinsatz nach einem der vorhergehenden Schutzansprüche, **dadurch gekennzeichnet, dass** die Lochplatte samt Standfüßen aus rostfreiem Edelstahl gefertigt ist.

7. Frittiereinsatz nach einem der vorhergehenden Ansprüche, **dadurch gekennzeichnet, dass** der Griff aus einem elastischen, rostfreien Edelstahl besteht.

8. Frittiereinsatz nach einem der vorhergehenden Ansprüche, **dadurch gekennzeichnet, dass** die Lochplatte aus einer Lochplattenkombination besteht, welche unter Veränderung der Lochgröße gegeneinander verschiebbar gekoppelt sind.

9. Frittiereinsatz nach einem der vorhergehenden Ansprüche, **dadurch gekennzeichnet, dass** Lochplatte und/oder Griff zumindest abschnittsweise mit thermochromer Beschichtung ausgerüstet sind.

10. Frittiereinsatz mit Griff nach einem der vorhergehenden Ansprüche, wobei der Frittiereinsatz im Wesentlichen aus einer flächig erstreckten Lochplatte besteht, **dadurch gekennzeichnet, dass**
- die Lochplatte Standfüße aufweist, welche in eingesetzter Position den Frittiereinsatz zu einem horizontalen Gefäßboden hin beabstanden und die Lochplatte in eingesetzter Position mit einem seitlich offenen Spalt zwischen Lochplatte und horizontalem Gefäßboden angeordnet ist,
- der Griff in Ausklinkungen der Lochplatte einsetzbar ist,
- der Griff U-förmig gebogen ist und unter elastischer Klemmspannung mit der Lochplatte verbindbar ist,
- der Griff in mit der Lochplatte verbundenem Zustand flach und seitlich herausragend angeordnet ist,
- der Griff eine thermisch isolierende Silikonbeschichtung im Handhabungsbereich aufweist,
- die Lochplatte samt Standfüßen aus rostfreiem Edelstahl besteht
- der Griff aus einem elastischen, rostfreien Edelstahl besteht.
